# EUROPEAN PATENT APPLICATION

(11) **EP 4 543 120 A1**
(43) Date of publication of application: **23.04.2025**
(21) Application number: 22946327.8
(22) Date of filing: 17.06.2022
(51) Int. Cl.: H04W 72/12

(54) **CELL DETERMINATION METHOD AND APPARATUS, AND DOWNLINK CONTROL INFORMATION SENDING METHOD AND APPARATUS**

(71) Applicant: Beijing Xiaomi Mobile Software Co., Ltd., Beijing 100085 (CN)
(72) Inventor: ZHAO, Qun, Beijing 100085 (CN)
(74) Representative: Stöckeler, Ferdinand
(86) International application number: PCT/CN2022/099619
(87) International publication number: WO 2023/240646

(57) **Abstract**

The present invention relates to a cell determination method and apparatus, and a downlink control information sending method and apparatus. The cell determination method comprises: receiving downlink control information used for scheduling multiple cells, i.e. MC-DCI; determining relevant information of the MC-DCI; and on the basis of an association relationship between the relevant information and at least one cell, determining at least one cell corresponding to the relevant information of the MC-DCI to be a cell scheduled by the MC-DCI. According to the present invention, after receiving MC-DCI from a network device, a terminal can determine relevant information of the MC-DCI, and then determine, on the basis of a pre-stored association relationship between the relevant information and at least one cell, a cell corresponding to the relevant information of the MC-DCI to be a cell scheduled by the MC-DCI. Therefore, when MC-DCI schedules multiple cells, a terminal can also determine the multiple cells scheduled by the MC-DCI without the need to adjust a CIF in the DCI.

## Description

### FIELD

The present invention relates to the field of communication technology, and in particular to a cell determination method, a downlink control information sending method, a cell determination apparatus, a downlink control information sending apparatus, a communication apparatus, and a computer-readable storage medium.

### BACKGROUND

In the related art, one piece of downlink control information (DCI) is only used for scheduling data in one cell, for example, scheduling a physical uplink shared channel (PUSCH) or a physical downlink shared channel (PDSCH) of one cell.

With the fragmentation of frequency resources, the demand for scheduling data in multiple cells simultaneously is gradually increasing. In order to reduce the control message overhead, it is proposed to schedule data in multiple cells by using a single DCI. For example, a DCI used for scheduling (data in) multiple cells can be called MC-DCI, where MC denotes multi-cell or multi-carrier. With the introduction of MC-DCI, some technical problems have also arisen.

### SUMMARY

In view of this, embodiments of the present invention provide a cell determination method, a downlink control information sending method, a cell determination apparatus, a downlink control information sending apparatus, a communication apparatus and a computer-readable storage medium, to solve the technical problems in the related art.

According to a first aspect of embodiments of the present invention, a cell determination method performed by a terminal is provided, and the method includes: receiving downlink control information for scheduling multiple cells (MC-DCI); determining relevant information of the MC-DCI; and determining, based on an association relationship between the relevant information and at least one cell, that the at least one cell corresponding to the relevant information of the MC-DCI is a cell scheduled by the MC-DCI.

According to a second aspect of embodiments of the present invention, a cell determination method performed by a terminal is provided, and the method includes: receiving downlink control information for scheduling multiple cells (MC-DCI); and determining the cell scheduled by the MC-DCI according to indication information sent by a network device.

According to a third aspect of embodiments of the present invention, a downlink control information sending method performed by a network device is provided, and the method includes: determining a cell scheduled by downlink control information for scheduling multiple cells (MC-DCI); setting relevant information of the MC-DCI according to an association relationship between the relevant information and at least one cell and the cell scheduled by the MC-DCI; and sending the MC-DCI to a terminal.

According to a fourth aspect of embodiments of the present invention, a downlink control information sending method performed by a network device is provided, and the method includes: sending indication information to a terminal, in which the indication information is used for indicating a cell scheduled by downlink control information for scheduling multiple cells (MC-DCI) that is sent to the terminal; and sending the MC-DCI to the terminal.

According to a fifth aspect of embodiments of the present invention, a cell determination apparatus is provided, and the apparatus includes: a receiving module, configured to receive downlink control information for scheduling multiple cells (MC-DCI); and a processing module, configured to determine relevant information of the MC-DCI, and determine, according to an association relationship between the relevant information and at least one cell, that the at least one cell corresponding to the relevant information of the MC-DCI is a cell scheduled by the MC-DCI.

According to a sixth aspect of embodiments of the present invention, a cell determination apparatus is provided, and the apparatus includes: a receiving module, configured to receive downlink control information for scheduling multiple cells (MC-DCI); and a processing module, configured to determine a cell scheduled by the MC-DCI according to indication information sent by a network device.

According to a seventh aspect of embodiments of the present invention, a downlink control information sending apparatus is provided, and the apparatus includes: a processing module, configured to determine a cell scheduled by downlink control information for scheduling multiple cells (MC-DCI), and set relevant information of the MC-DCI according to an association relationship between the relevant information and at least one cell and the cell scheduled by the MC-DCI; and a sending module, configured to send the MC-DCI to a terminal.

According to an eighth aspect of embodiments of the present invention, a downlink control information sending apparatus is provided, and the apparatus includes: a sending module, configured to send indication information to a terminal, in which the indication information is used for indicating a cell scheduled by downlink control information for scheduling multiple cells (MC-DCI) that is sent to the terminal; and send the MC-DCI to the terminal.

According to a ninth aspect of embodiments of the present invention, a communication apparatus is provided, and the communication apparatus includes: a processor, and a memory storing a computer program; in which the computer program, when being executed by the processor, causes the above-mentioned cell determination method to be implemented.

According to a tenth aspect of embodiments of the present invention, a communication apparatus is provided, and the communication apparatus includes: a processor, and a memory storing a computer program; in which the computer program, when being executed by the processor, causes the above-mentioned downlink control information sending method to be implemented.

According to an eleventh aspect of embodiments of the present invention, a computer-readable storage medium storing a computer program is provided, and the computer program, when being executed by a processor, causes the steps of the above-mentioned cell determination method to be implemented.

According to a twelfth aspect of embodiments of the present invention, a computer-readable storage medium storing a computer program is provided, and the computer program, when being executed by a processor, causes the steps of the above-mentioned downlink control information sending method to be implemented.

According to embodiments of the present invention, after receiving MC-DCI from a network device, a terminal can determine relevant information of the MC-DCI, and then determine, according to a pre-stored association relationship between the relevant information and at least one cell, that a cell corresponding to the relevant information of the MC-DCI is the cell scheduled by the MC-DCI. Accordingly, in a case that the MC-DCI schedules multiple cells, the terminal can determine the multiple cells scheduled by the MC-DCI even if a carrier indication field (CIF) in the DCI is not adjusted.

According to embodiments of the present invention, after receiving MC-DCI from a network device, a terminal can determine, according to indication information sent by the network device, multiple cells scheduled by the MC-DCI, so as to adopt an appropriate parsing method to correctly parse the MC-DCI. Accordingly, in a case that the MC-DCI schedules multiple cells, the terminal can determine the multiple cells scheduled by the MC-DCI even if a CIF in the DCI is not adjusted.

### BRIEF DESCRIPTION OF THE DRAWINGS

In order to more clearly illustrate the technical solutions in the embodiments of the present invention, the drawings required for the description of the embodiments will be briefly introduced below. Obviously, the drawings described below are only some embodiments of the present invention. One of ordinary skill in the art can obtain other drawings based on these drawings without creative effort.
Fig. 1 is a schematic flowchart of a cell determination method according to an embodiment of the present invention.
Fig. 2 is a schematic flowchart of a cell determination method according to an embodiment of the present invention.
Fig. 3 is a schematic diagram of an application scenario of a cell determination method according to an embodiment of the present invention.
Fig. 4 is a schematic flowchart of a downlink control information sending method according to an embodiment of the present invention.
Fig. 5 is a schematic flowchart of a downlink control information sending method according to an embodiment of the present invention.
Fig. 6 is a schematic block diagram of a cell determination apparatus according to an embodiment of the present invention.
Fig. 7 is a schematic block diagram of a cell determination apparatus according to an embodiment of the present invention.
Fig. 8 is a schematic block diagram of a downlink control information sending apparatus according to an embodiment of the present invention.
Fig. 9 is a schematic block diagram of a downlink control information sending apparatus according to an embodiment of the present invention.
Fig. 10 is a schematic block diagram of an apparatus for sending downlink control information according to an embodiment of the present invention.
Fig. 11 is a schematic block diagram of an apparatus for cell determination according to an embodiment of the present invention.

### DETAILED DESCRIPTION

Reference will be made clearly and completely in the technical solution of the embodiments of the disclosure with the accompanying drawings. Obviously, the embodiments described here are only part of the embodiments of the disclosure and are not all embodiments of the disclosure. Based on the embodiments of the disclosure, other embodiments obtained by those skilled in the art without inventive works are within the scope of the disclosure.

The terms used in the embodiments of the present invention are only for the purpose of describing specific embodiments and are not intended to limit the embodiments of the present invention. The singular forms "a", "an" and "the" used in the embodiments of the present invention and the appended claims are also intended to include plural forms, unless the context clearly indicates other meanings. It should also be understood that the term "and/or" used herein refers to and includes any or all possible combinations of one or more associated listed items.

It should be understood that although the terms "first", "second", "third", etc. may be used to describe various information in the embodiments of the present invention, these information should not be limited by these terms. These terms are only used to distinguish same type of information from each other. For example, without departing from the scope of the embodiments of the present invention, the first information may also be referred to as the second information, and similarly, the second information may also be referred to as the first information. Depending on the context, the word "if" as used herein may be interpreted as "once" or "when" or "in response to determining".

For the purpose of brevity and ease of understanding, term "greater than" or "less than", "higher than" or "lower than" are used herein to characterize size relationships. However, it is understood by those skilled in the art that, the term "greater than" also covers the meaning of "greater than or equal to", the term "less than" also covers the meaning of "less than or equal to", the term "higher than" covers the meaning of "higher than or equal to", and "lower than" also covers the meaning of "lower than or equal to".

According to an embodiment, in a case that DCI for scheduling multiple cells (e.g., scheduling data in 3, 4, or 8 serving cells) is introduced, the DCI for scheduling multiple cells may be referred to as MC-DCI, where MC represents multi-cell or multi-carrier. The expression "scheduling a cell" used in all embodiments of the present invention refers to scheduling data in the cell.

MC-DCI is a newly introduced DCI. The format of MC-DCI may be different from that of legacy DCI. Legacy DCI includes but is not limited to DCI used for scheduling a single cell, such as DCI format 0_0, DCI format 1_0, DCI format 0_1, DCI format 1_1, DCI format 0_2, DCI format 1_2. MC-DCI may include DCI format 0_3 and DCI format 1_3.

MC-DCI can be used to schedule multiple cells, but the conventional way for indicating the cell scheduled by DCI is to use a carrier indication field (CIF) in the DCI. However, the conventional CIF can only indicate one cell, and is not suitable for indicating multiple cells scheduled by MC-DCI.

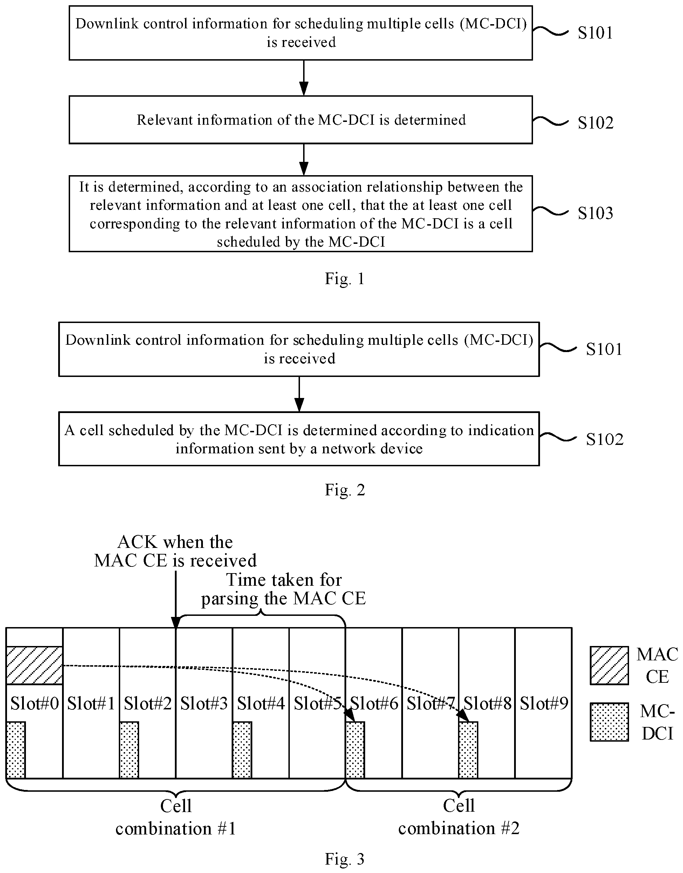

Fig. 1 is a schematic flowchart of a cell determination method according to an embodiment of the present invention. The cell determination method according to this embodiment can be performed by a terminal, and the terminal includes but is not limited to a communication apparatus such as a mobile phone, a tablet computer, a wearable device, a sensor, or an Internet of Things device. The terminal can communicate with a network device, and the network device includes but is not limited to a network device in a fourth generation (4G) communication system, fifth generation (5G) communication system, sixth generation (6G) communication system, etc., such as a base station or a core network.

As shown in Fig. 1, the cell determination method may include the following steps.

In step S101, downlink control information for scheduling multiple cells (MC-DCI) is received.

In step S102, relevant information of the MC-DCI is determined.

In step S103, it is determined, according to an association relationship between the relevant information and at least one cell, that the at least one cell corresponding to the relevant information of the MC-DCI is a cell scheduled by the MC-DCI.

According to an embodiment, the terminal may determine whether the DCI sent by the network device is MC-DCI or legacy DCI. If it is determined that the DCI sent by the network device is legacy DCI, it is not necessary to perform the steps in the embodiments of the present invention. If it is determined that the DCI sent by the network device is MC-DCI, the steps in the embodiments of the present invention are performed.

The terminal can distinguish MC-DCI from legacy DCI according to the format of the DCI, and can also distinguish MC-DCI from legacy DCI in other ways, e.g., distinguishing MC-DCI from legacy DCI according to the resources used to receive the DCI. This disclosure is not limited thereto.

According to an embodiment of the present invention, after receiving MC-DCI from a network device, the terminal can determine the relevant information of MC-DCI, and then determine, based on a pre-stored association relationship between the relevant information and at least one cell (e.g., a cell set, a cell group), that a cell (which can be one cell or multiple cells) corresponding to the relevant information of MC-DCI is the cell scheduled by MC-DCI. Accordingly, in a case that MC-DCI schedules multiple cells, the terminal can determine the multiple cells scheduled by MC-DCI even if the CIF in the DCI is not adjusted.

It should be noted that the association relationship may be an association relationship between MC-DCI and multiple cells, that is, when MC-DCI is used to schedule multiple cells, the terminal determines the cells scheduled by MC-DCI based on the association relationship; and for the flexibility of scheduling, in some cases when MC-DCI is set to schedule a single cell, the terminal may choose to determine the single cell scheduled by the MC-DCI based on the CIF in the DCI, or determine the single cell scheduled by the MC-DCI according to the steps in this embodiment.

According to an embodiment, the number of cells that MC-DCI can schedule can be configured as needed, for example, 3, 4 or 8 cells can be scheduled. The following is mainly an exemplary description based on the case where MC-DCI can schedule 4 cells.

For example, the four cells that can be scheduled by MC-DCI include cell#1, cell#2, cell#3, and cell#4. Then the cells scheduled by MC-DCI each time may be a subset of the four cells, and the subset includes at least one of following subsets:
{cell#1, cell#2, cell#3, cell#4};
{cell#1, cell#2, cell#3};
{cell#1, cell#2, cell#4};
{cell#1, cell#3, cell#4};
{cell#2, cell#3, cell#4};
{cell#1, cell#2};
{cell#1, cell#3};
{cell#1, cell#4};
{cell#2, cell#3};
{cell#2, cell#4};
{cell#3, cell#4};
{cell#1};
{cell#2};
{cell#3}; or
{cell#4}.

According to an embodiment, the relevant information includes at least one of:
a radio network temporary identity (RNTI) used for scrambling the MC-DCI; or
a resource for receiving the MC-DCI.

For example, after receiving MC-DCI, the terminal can determine the RNTI used for scrambling the MC-DCI. For example, the association relationship is that the first RNTI corresponds to {cell#1, cell#2, cell#3, cell#4} in the above subsets, and the second RNTI corresponds to {cell#1, cell#2, cell#3} in the above subsets. Then, when it is determined that the RNTI used for scrambling the MC-DCI is the first RNTI, it can be determined that the cells scheduled by the MC-DCI include cell#1, cell#2, cell#3, and cell#4. When it is determined that the RNTI used for scrambling the MC-DCI is the second RNTI, it can be determined that the cells scheduled by the MC-DCI include cell#1, cell#2, cell#3.

The first RNTI may be a cell radio network temporary identity (C-RNTI), and the second RNTI may be other RNTIs, e.g., a newly configured RNTI, which may be called MC-RNTI, where MC represents multiple cells or multiple carriers.

For example, after receiving MC-DCI, the terminal can determine the resource used to receive the MC-DCI. For example, the association relationship is that the first resource corresponds to {cell#1, cell#2, cell#3, cell#4} in the above subsets, and the second resource corresponds to {cell#1, cell#2, cell#3} in the above subsets. Then, when it is determined that the MC-DCI is received in the first resource, it can be determined that the cells scheduled by the MC-DCI include cell#1, cell#2, cell#3, and cell#4. When it is determined that the MC-DCI is received in the second resource, it can be determined that the cells scheduled by the MC-DCI include cell#1, cell#2, cell#3.

According to an embodiment, the resource includes at least one of:
a cell;
a bandwidth part (BWP);
a control resource set (CORESET); or
a search space (SS).

Taking the resource including a cell as an example, the association relationship may be as shown in Table 1:

**Table 1**

| Cell for receiving/sending MC-DCI | Cell combination scheduled by the MC-DCI |
|---|---|
| Cell #1 | cell#1, cell#2, cell#3, cell#4 |
| Cell #2 | cell#1, cell#2, cell#3 |
| Cell #3 | cell#2, cell#3, cell#4 |
| Cell #4 | cell#3, cell#4 |

According to Table 1, when MC-DCI is received in Cell#1, it can be determined that the cells scheduled by the MC-DCI include cell#1, cell#2, cell#3, and cell#4; when MC-DCI is received in Cell#2, it can be determined that the cells scheduled by the MC-DCI include cell#1, cell#2, and cell#3; when MC-DCI is received in Cell#3, it can be determined that the cells scheduled by MC-DCI include cell#2, cell#3, and cell#4; when MC-DCI is received in Cell#4, it can be determined that the cells scheduled by MC-DCI include cell#3 and cell#4.

Taking the resource including a BWP as an example, the association relationship may be as shown in Table 2:

**Table 2**

| BWP for receiving/sending MC-DCI | Cell combination scheduled by the MC-DCI |
|---|---|
| BWP #1 | cell#1, cell#2, cell#3, cell#4 |
| BWP #2 | cell#1, cell#2, cell#3 |
| BWP #3 | cell#2, cell#3, cell#4 |
| BWP #4 | cell#3, cell#4 |

According to Table 2, when MC-DCI is received on BWP #1, it can be determined that the cells scheduled by the MC-DCI include cell#1, cell#2, cell#3, and cell#4; when MC-DCI is received on BWP #2, it can be determined that the cells scheduled by the MC-DCI include cell#1, cell#2, and cell#3; when MC-DCI is received on BWP #3, it can be determined that the cells scheduled by the MC-DCI include cell#2, cell#3, and cell#4; when MC-DCI is received on BWP #4, it can be determined that the cells scheduled by the MC-DCI include cell#3 and cell#4.

According to an embodiment, the method further includes: determining the association relationship according to a protocol; and/or determining the association relationship according to indication information sent by a network device.

The association relationship may be set by a protocol; the association relationship may also be determined by the network device and then indicated to the terminal through indication information; optionally, a set of candidate association relationships may be set by a protocol, and the network device indicates one association relationship in the candidate association relationship set to the terminal through indication information.

Fig. 2 is a schematic flowchart of a cell determination method according to an embodiment of the present invention. The cell determination method according to this embodiment can be performed by a terminal, and the terminal includes but is not limited to a communication apparatus such as a mobile phone, a tablet computer, a wearable device, a sensor, an Internet of Things device. The terminal can communicate with a network device, and the network device includes but is not limited to a network device in a 4G, 5G, 6G communication system, etc., such as a base station or a core network.

As shown in Fig. 2, the cell determination method may include the following steps.

In step S201, downlink control information for scheduling multiple cells (MC-DCI) is received.

In step S202, a cell scheduled by the MC-DCI is determined according to indication information sent by a network device.

According to an embodiment, the terminal may determine whether the DCI sent by the network device is MC-DCI or legacy DCI. If it is determined that the DCI sent by the network device is legacy DCI, it is not necessary to perform the steps in the embodiments of the present invention. If it is determined that the DCI sent by the network device is MC-DCI, the steps in the embodiments of the present invention are performed.

The terminal can distinguish MC-DCI from legacy DCI according to the format of the DCI, and can also distinguish MC-DCI from legacy DCI in other ways, e.g., distinguishing MC-DCI from legacy DCI according to the resources used to receive the DCI. This disclosure is not limited thereto.

According to an embodiment of the present invention, after receiving MC-DCI from a network device, the terminal can determine the multiple cells scheduled by the MC-DCI according to the indication information sent by the network device (the indication information can be received before or after receiving the MC-DCI, or can be included in the MC-DCI), so as to adopt an appropriate parsing method to correctly parse the MC-DCI. Accordingly, in a case that MC-DCI schedules multiple cells, the terminal can determine the multiple cells scheduled by MC-DCI even if the CIF in the DCI is not adjusted.

It should be noted that, in a case that the terminal has pre-stored the association relationship mentioned in the previous embodiment, the terminal can also receive indication information sent by the network device. In such a circumstance, the terminal can preferentially determine whether the DCI is used for scheduling a single cell or for scheduling multiple cells based on the indication information.

According to an embodiment, the indication information is carried in at least one of:
a media access control control element (MAC CE); or
a radio resource control (RRC) message.

The network device can send the indication information before sending MC-DCI to the terminal, and the terminal can receive the indication information before receiving MC-DCI. For example, the terminal receives an RRC message and/or MAC CE before receiving MC-DCI, and then can determine the multiple cells scheduled by the subsequently received MC-DCI according to the indication information in the RRC message and/or MAC CE.

According to an embodiment, the method further includes: in a case that an MAC CE carrying the indication information is not correctly received, determining that at least one preset cell is the cell scheduled by the MC-DCI, or determining that a cell of a cell combination with a preset sequence number among a preset cell combination list is the cell scheduled by the MC-DCI.

The terminal may not correctly receive the MAC CE carrying the indication information when receiving the MAC CE (for example, the MAC CE carrying the indication information is not received, or the MAC CE carrying the indication information is received but not correctly decoded). In this situation, it is not possible to determine which cells are scheduled by MC-DCI according to the indication information carried in the MAC CE. In response to this situation, the terminal determines one or more preset cells as the cell scheduled by MC-DCI, or the terminal may pre-store a list, which may be called a preset cell combination list, and the list includes one or more cell combinations. The terminal may determine that the cell of a cell combination with a preset sequence number (for example, the first cell combination or the last cell combination) in the list is the cell scheduled by MC-DCI.

According to an embodiment, the method further includes: determining the at least one preset cell and/or the preset cell combination list according to a protocol; and/or determining the at least one preset cell and/or the preset cell combination list according to an indication from a network device.

In a case that the terminal fails to correctly receive the MAC CE, the at least one preset cell and/or preset cell combination list, on which the determining the cell scheduled by the MC-DCI is based, may be set by a protocol, or may be indicated by a network device, for example, the network device indicates the at least one preset cell and/or the preset cell combination list to the terminal through other indication information.

Fig. 3 is a schematic diagram of an application scenario of a cell determination method according to an embodiment of the present invention.

As shown in Fig. 3, in a case that the network device carries the indication information through MAC CE to indicate multiple cells scheduled by MC-DCI to the terminal, the terminal may receive the MAC CE carrying the indication information in slot#0, but the indication information in the MAC CE may not take effect immediately, that is, it may not be used to indicate multiple cells scheduled by the MC-DCI in slot#0. Instead, after determining that the MAC CE is correctly received, the indication information in the MAC CE is not used for indicating multiple cells scheduled by MC-DCI until a preset time duration elapses (for example, the preset time duration may be determined according to a processing capability of the terminal, and may be the time duration consumed by the terminal to parse the MAC CE).

For example, the terminal determines that the MAC CE is correctly received and feeds back acknowledgement information (ACK) of the correctly received MAC CE to the network device in slot#3, and then the terminal waits for a preset time duration, e.g., 3 milliseconds. Since each slot corresponds to 1 millisecond, starting from slot#6, the terminal can determine the multiple cells scheduled by the received MC-DCI according to the indication information carried by the MAC CE received in slot#0.

For example, if the cell scheduled by MC-DCI that is indicated by the indication information in the MAC CE is the cell combination #2, then starting from slot #6, the terminal can determine that the cell scheduled by the received MC-DCI is the cell of the cell combination #2. For the MC-DCI received in the slot before slot #6, the terminal can use previously received indication information to determine the cell scheduled by MC-DCI. For example, if the previously received indication information indicates that the cell scheduled by MC-DCI is the cell combination #1, then for MC-DCI received in slot #0 to slot #5, it can be determined that the cell scheduled by the MC-DCI is the cell of the cell combination #1.

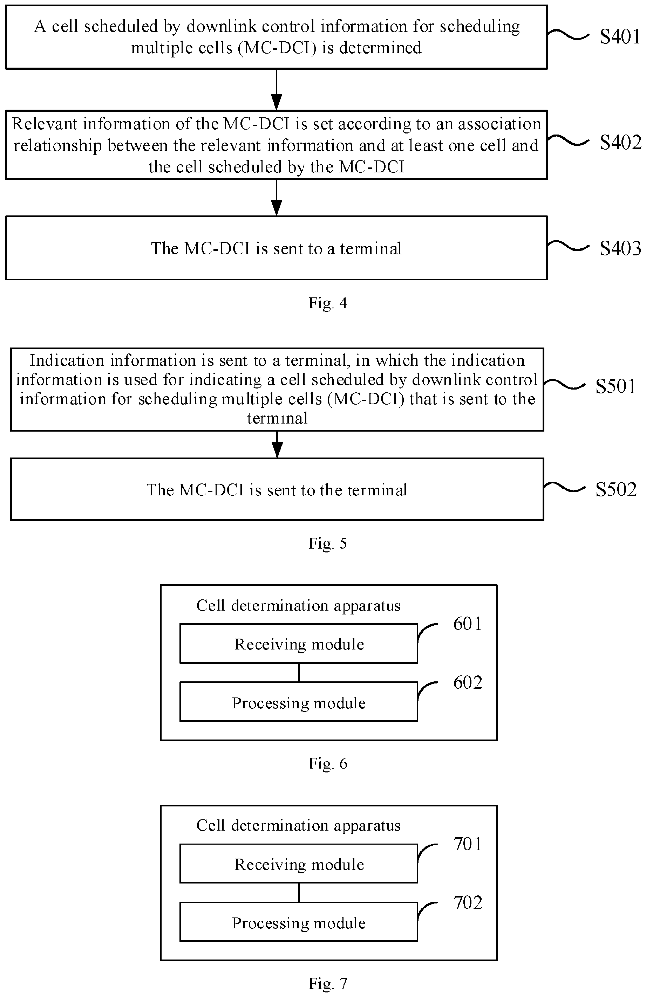

Fig. 4 is a schematic flowchart of a downlink control information sending method according to an embodiment of the present invention. The downlink control information sending method according to this embodiment can be performed by a network device, and the network device can communicate with a terminal. The network device includes but is not limited to a base station in a communication system such as a 4G base station, a 5G base station, or a 6G base station; and the terminal includes but is not limited to: a mobile phone, a tablet computer, a wearable device, a sensor, an Internet of Things device, and other communication apparatuses.

As shown in Fig. 4, the downlink control information sending method may include the following steps.

In step S401, a cell scheduled by downlink control information for scheduling multiple cells (MC-DCI) is determined.

In step S402, relevant information of the MC-DCI is set according to an association relationship between the relevant information and at least one cell and the cell scheduled by the MC-DCI.

In step S403, the MC-DCI is sent to a terminal.

According to an embodiment, the network device may determine whether the DCI to be sent to the terminal is MC-DCI or legacy DCI. If it is determined that the DCI to be sent to the terminal is legacy DCI, it is not necessary to perform the steps in the embodiments of the present invention. If it is determined that the DCI to be sent to the terminal is MC-DCI, the steps in the embodiments of the present invention are performed.

For MC-DCI and legacy DCI, the network device can set different formats so that the terminal can distinguish them. Of course, the terminal can also distinguish them in other ways, e.g., distinguishing them according to the resource used to receive the DCI. This disclosure is not limited thereto.

According to an embodiment of the present invention, in a case that the network device sends MC-DCI to the terminal, the network device can determine the cell scheduled by the MC-DCI, and then set relevant information of the MC-DCI (for example, the relevant information in the association relationship that corresponds to the cell scheduled by the MC-DCI) according to the association relationship between the relevant information and at least one cell (for example, a cell set, a cell group) and the cell scheduled by the MC-DCI, so that the terminal can determine according to the association relationship that the cell corresponding to the relevant information of the MC-DCI is the cell scheduled by the MC-DCI. Accordingly, in a case that MC-DCI schedules multiple cells, the terminal can determine the multiple cells scheduled by MC-DCI even if the CIF in the DCI is not adjusted.

According to an embodiment, the relevant information includes at least one of:
a radio network temporary identity (RNTI) used for scrambling the MC-DCI; or
a resource for receiving the MC-DCI.

When the MC-DCI is used for scheduling different cells, the network device can use different RNTIs to scramble the MC-DCI. For example, in a case that the association relationship is that the first RNTI corresponds to {cell#1, cell#2, cell#3, cell#4}, and the second RNTI corresponds to {cell#1, cell#2, cell#3}, when it is determined that the MC-DCI to be sent to the terminal is used for scheduling cell#1, cell#2, cell#3, and cell#4, the first RNTI can be used for scrambling the MC-DCI, so that after receiving the MC-DCI, the terminal can determine, according to the fact that the RNTI used for scrambling the MC-DCI is the first RNTI, that the MC-DCI is used for scheduling cell#1, cell#2, cell#3, and cell#4; when it is determined that the MC-DCI to be sent to the terminal is used to schedule cell#1, cell#2, and cell#3, the second RNTI can be used for scrambling the MC-DCI, so that after receiving the MC-DCI, the terminal can determine, according to the fact that the RNTI used for scrambling the MC-DCI is the second RNTI, that the MC-DCI schedules cell#1, cell#2, cell#3.

The first RNTI may be a cell radio network temporary identity (C-RNTI), and the second RNTI may be other RNTIs, e.g., a newly configured RNTI, which may be called MC-RNTI, where MC represents multiple cells or multiple carriers.

When MC-DCI is used for scheduling different cells, the network device can use different resources to send the MC-DCI. For example, in a case that the association relationship is that the first resource corresponds to {cell#1, cell#2, cell#3, cell#4}, and the second resource corresponds to {cell#1, cell#2, cell#3}, when it is determined that the MC-DCI to be sent to the terminal is used for scheduling cell#1, cell#2, cell#3, and cell#4, the first resource can be used to send the MC-DCI, so that after receiving the MC-DCI, the terminal can determine, according to the fact that the resource for receiving the MC-DCI is the first resource, that the MC-DCI schedules cell#1, cell#2, cell#3, and cell#4; when it is determined that the MC-DCI to be sent to the terminal is used for scheduling cell#1, cell#2, and cell#3, the second resource can be used to send the MC-DCI, so that after receiving the MC-DCI, the terminal can determine, according to the fact that the resource for receiving the MC-DCI is the second resource, that the MC-DCI schedules cell#1, cell#2, cell#3.

According to an embodiment, the resource includes at least one of:
a cell;
a bandwidth part (BWP);
a control resource set (CORESET); or
a search space (SS).

According to an embodiment, the method further includes: determining the association relationship according to a protocol; and/or sending indication information to the terminal, in which the indication information is used for indicating the association relationship.

The association relationship may be set by a protocol; the association relationship may also be determined by the network device and then indicated to the terminal through indication information; optionally, a set of candidate association relationships may be set by a protocol, and the network device indicates one association relationship in the candidate association relationship set to the terminal through indication information.

Fig. 5 is a schematic flowchart of a downlink control information sending method according to an embodiment of the present invention. The downlink control information sending method according to this embodiment can be performed by a network device. The network device can communicate with a terminal. The network device includes but is not limited to a base station in a communication system such as a 4G base station, a 5G base station, or a 6G base station, and the terminal includes but is not limited to: a mobile phone, a tablet computer, a wearable device, a sensor, an Internet of Things device, and other communication apparatuses.

As shown in Fig. 5, the downlink control information sending method may include the following steps.

In step S501, indication information is sent to a terminal, in which the indication information is used for indicating a cell scheduled by downlink control information for scheduling multiple cells (MC-DCI) that is sent to the terminal.

In step S502, the MC-DCI is sent to the terminal.

According to an embodiment, the network device may determine whether the DCI to be sent to the terminal is MC-DCI or legacy DCI. If it is determined that the DCI to be sent to the terminal is legacy DCI, it is not necessary to perform the steps in the embodiments of the present invention. If it is determined that the DCI to be sent to the terminal is MC-DCI, the steps in the embodiments of the present invention are performed.

For MC-DCI and legacy DCI, the network device can set different formats so that the terminal can distinguish them. Of course, the terminal can also distinguish them in other ways, such as distinguishing them according to the resource used to receive the DCI. This disclosure is not limited thereto.

According to an embodiment of the present invention, a network device may send indication information to a terminal (the indication information may be sent before sending MC-DCI or may be carried in MC-DCI) to indicate the cell scheduled by the MC-DCI sent to the terminal. After receiving the MC-DCI from the network device, the terminal may determine, according to the indication information, which cells are scheduled by the MC-DCI. Accordingly, in a case that MC-DCI schedules multiple cells, the terminal may determine the multiple cells scheduled by the MC-DCI even if the CIF in the DCI is not adjusted.

It should be noted that, in a case that the terminal has pre-stored the association relationship mentioned in the foregoing embodiment, the network may also send indication information to the terminal. In such a circumstance, the terminal may preferentially determine the cell scheduled by the DCI according to the indication information.

According to an embodiment, the indication information is carried in at least one of:
a media access control control element (MAC CE); or
a radio resource control (RRC) message.

The network device can send the indication information before sending MC-DCI to the terminal, and the terminal can receive the indication information before receiving MC-DCI. For example, the terminal can receive RRC message and/or MAC CE before receiving MC-DCI, and then determine, based on the indication information carried by the RRC message and/or MAC CE, whether the subsequently received MC-DCI is used for scheduling multiple cells or for scheduling a single cell.

According to an embodiment, the method further includes: indicating at least one preset cell and/or a preset cell combination list to the terminal, in which in a case that an MAC CE carrying the indication information is not correctly received, the terminal determines that at least one preset cell is the cell scheduled by MC-DCI, or determines that a cell of a cell combination with a preset sequence number among a preset cell combination list is the cell scheduled by the MC-DCI.

The terminal may not correctly receive the MAC CE carrying the indication information when receiving the MAC CE (for example, the MAC CE carrying the indication information is not received, or the MAC CE carrying the indication information is received but not correctly decoded). In this situation, it is not possible to determine which cells are scheduled by MC-DCI according to the indication information carried in the MAC CE.

In response to this situation, the network device can indicate at least one preset cell and/or a preset cell combination list to the terminal, and the terminal can determine, according to the indication from the network device, that the preset one or more cells are the cell scheduled by MC-DCI, or the terminal can determine, according to the indication from the network device, the preset cell combination list which contains one or more cell combinations, and the terminal can determine that the cell of the cell combination with a preset sequence number (for example, the first cell combination or last cell combination) in the list is the cell scheduled by MC-DCI.

The present invention also provides embodiments of a cell determination apparatus and a downlink control information sending apparatus, which correspond to the aforementioned embodiments of the cell determination method and the downlink control information sending method.

Fig. 6 is a schematic block diagram of a cell determination apparatus according to an embodiment of the present invention. The cell determination apparatus according to this embodiment may be a terminal, or an apparatus composed of modules in a terminal. The terminal includes but is not limited to: a mobile phone, a tablet computer, a wearable device, a sensor, an Internet of Things device and other communication apparatuses. The terminal may communicate with a network device, and the network device includes but is not limited to a network device in a 4G communication system, 5G communication system, 6G communication system, etc., such as a base station or a core network.

As shown in Fig. 6, the cell determination apparatus includes:
a receiving module 601, configured to receive downlink control information for scheduling multiple cells (MC-DCI);
a processing module 602, configured to determine relevant information of the MC-DCI, and determine, according to an association relationship between the relevant information and at least one cell, that the at least one cell corresponding to the relevant information of the MC-DCI is a cell scheduled by the MC-DCI.

According to an embodiment, the relevant information includes at least one of: an RNTI used for scrambling the MC-DCI, or a resource for receiving the MC-DCI.

According to an embodiment, the resource includes at least one of: a cell, a bandwidth part (BWP), a control resource set (CORESET), or a search space (SS).

According to an embodiment, the processing module is further configured to determine the association relationship according to a protocol, and/or determine the association relationship according to indication information sent by a network device.

Fig. 7 is a schematic block diagram of a cell determination apparatus according to an embodiment of the present invention. The cell determination apparatus according to this embodiment may be a terminal, or an apparatus composed of modules in a terminal. The terminal includes but is not limited to: a mobile phone, a tablet computer, a wearable device, a sensor, an Internet of Things device and other communication apparatuses. The terminal may communicate with a network device, and the network device includes but is not limited to a network device in a 4G communication system, 5G communication system, 6G communication system, etc., such as a base station or a core network.

As shown in Fig. 7, the cell determination apparatus includes:
a receiving module 701, configured to receive downlink control information for scheduling multiple cells (MC-DCI);
a processing module 702, configured to determine the cell scheduled by the MC-DCI according to indication information sent by a network device.

According to an embodiment, the indication information is carried in at least one of: a media access control control element (MAC CE), or a radio resource control (RRC) message.

According to an embodiment, the processing module is further configured to, in a case that the MAC CE carrying the indication information is not correctly received, determine that at least one preset cell is the cell scheduled by the MC-DCI, or determine that a cell of a cell combination with a preset sequence number among a preset cell combination list is the cell scheduled by the MC-DCI.

According to an embodiment, the processing module is further configured to determine the at least one preset cell and/or the preset cell combination list according to a protocol, and/or determine the at least one preset cell and/or the preset cell combination list according to an indication from a network device.

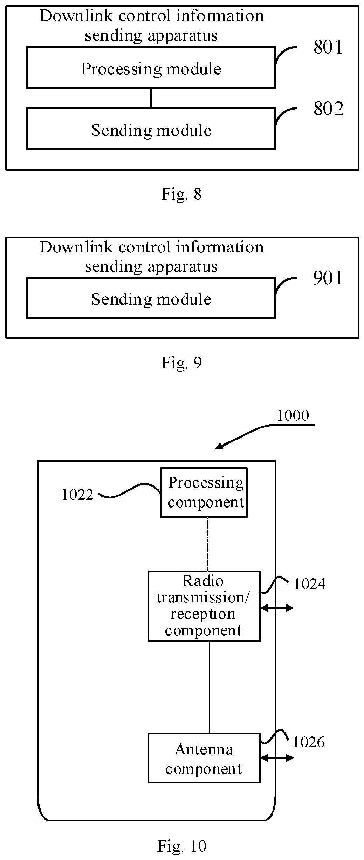

Fig. 8 is a schematic block diagram of a downlink control information sending apparatus according to an embodiment of the present invention. The downlink control information sending apparatus according to this embodiment may be a network device, or an apparatus composed of modules in a network device. The network device may communicate with a terminal. The terminal includes but is not limited to: a mobile phone, a tablet computer, a wearable device, a sensor, an Internet of Things device and other communication apparatuses. The network device includes but is not limited to a network device in a 4G communication system, 5G communication system, 6G communication system, etc., such as a base station or a core network.

As shown in Fig. 8, the downlink control information sending apparatus includes:
a processing module 801, configured to determine a cell scheduled by downlink control information for scheduling multiple cells (MC-DCI), and set the relevant information of the MC-DCI according to an association relationship between the relevant information and at least one cell and the cell scheduled by the MC-DCI;
a sending module 802, configured to send the MC-DCI to the terminal.

According to an embodiment, the relevant information includes at least one of: a radio network temporary identity (RNTI) used for scrambling the MC-DCI, or a resource for receiving the MC-DCI.

According to an embodiment, the resource includes at least one of: a cell, a bandwidth part (BWP), a control resource set (CORESET), or a search space (SS).

According to an embodiment, the processing module is further configured to determine the association relationship according to a protocol; and/or the sending module is further configured to send indication information to the terminal, in which the indication information is used for indicating the association relationship.

Fig. 9 is a schematic block diagram of a downlink control information sending apparatus according to an embodiment of the present invention. The downlink control information sending apparatus according to this embodiment may be a network device, or an apparatus composed of modules in a network device. The network device may communicate with a terminal. The terminal includes but is not limited to: a mobile phone, a tablet computer, a wearable device, a sensor, an Internet of Things device and other communication apparatuses. The network device includes but is not limited to a network device in a 4G communication system, 5G communication system, 6G communication system, etc., such as a base station or a core network.

As shown in Fig. 9, the downlink control information sending apparatus includes:
a sending module 901, configured to send indication information to the terminal, in which the indication information is used for indicating the cell scheduled by MC-DCI sent to the terminal; and send the MC-DCI to the terminal.

According to an embodiment, the indication information is carried in at least one of: a media access control control element (MAC CE), or a radio resource control (RRC) message.

According to an embodiment, the sending module is further configured to indicate at least one preset cell and/or a preset cell combination list to the terminal, in which in a case that the MAC CE carrying the indication information is not correctly received, the terminal determines that at least one preset cell is the cell scheduled by MC-DCI, or determines that a cell of a cell combination with a preset sequence number among a preset cell combination list is the cell scheduled by the MC-DCI.

Regarding the apparatuses in the above embodiments, the specific manner in which each module thereof performs the operation has been described in detail in the embodiments of the relevant methods, and will not be elaborated here.

For the apparatus embodiments, since they generally corresponds to the method embodiments, for the description thereof, references may be made to the partial description of the method embodiments. The apparatus embodiments described above are only illustrative, in which the modules described as separate components may or may not be physically separated, and the components displayed as modules may or may not be physical modules, that is, they may be located in one place, or they may be distributed on multiple network modules. Some or all of the modules may be selected according to actual needs to achieve the purpose of the solution according to the embodiments. One of ordinary skill in the art can understand and implement it without creative efforts.

An embodiment of the present invention further provides a communication apparatus, including: a processor, and a memory storing a computer program; in which when the computer program is executed by the processor, the cell determination method described in any of the above embodiments is implemented.

An embodiment of the present invention further provides a communication apparatus, including: a processor, and a memory storing a computer program; in which when the computer program is executed by the processor, the downlink control information sending method described in any of the above embodiments is implemented.

An embodiment of the present invention further provides a computer-readable storage medium storing a computer program. The computer program, when being executed by a processor, causes the steps of the cell determination method described in any of the above embodiments to be implemented.

An embodiment of the present invention further provides a computer-readable storage medium storing a computer program. The computer program, when being executed by a processor, causes the steps of the downlink control information sending method described in any of the above embodiments to be implemented.

As shown in Fig. 10, Fig. 10 is a schematic block diagram of an apparatus 1000 for sending downlink control information according to an embodiment of the present invention. The apparatus 1000 may be provided as a base station. Referring to Fig. 10, the apparatus 1000 includes a processing component 1022, a radio transmission/reception component 1024, an antenna component 1026, and a signal processing part specific to a radio interface, and the processing component 1022 may further include one or more processors. One processor in the processing component 1022 may be configured to implement the downlink control information sending method described in any of the above embodiments.

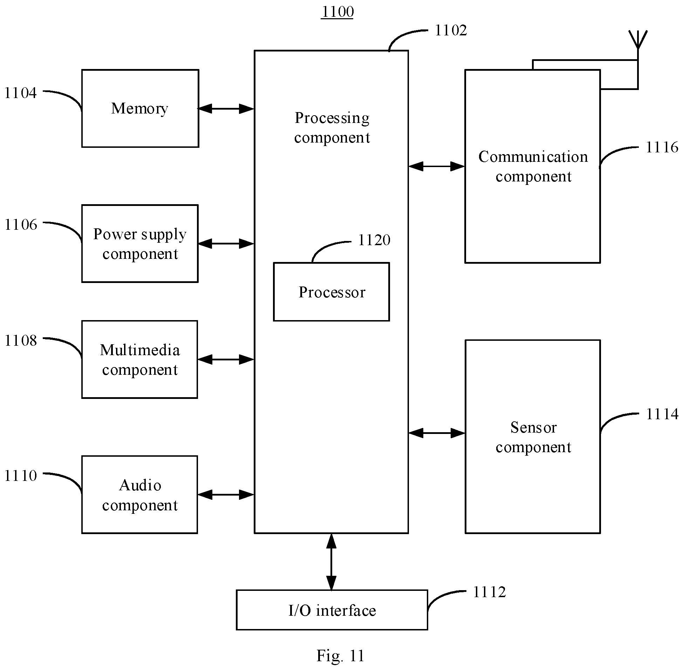

Fig. 11 is a schematic block diagram of an apparatus 1100 for cell determination according to an embodiment of the present invention. For example, the apparatus 1100 may be a mobile phone, a computer, a digital broadcast terminal, a messaging device, a game console, a tablet device, a medical device, a fitness device, a personal digital assistant, etc.

As shown in Fig. 11, the apparatus 1100 may include one or more of the following components: a processing component 1102, a memory 1104, a power supply component 1106, a multimedia component 1108, an audio component 1110, an input/output (I/O) interface 1112, a sensor component 1114, and a communication component 1116.

The processing component 1102 generally controls the overall operation of the apparatus 1100, such as operations associated with display, phone calls, data communications, camera operations, and recording operations. The processing component 1102 may include one or more processors 1120 to execute instructions, to complete all or part of the steps of the above-mentioned cell determination method. In addition, the processing component 1102 may include one or more modules to facilitate the interaction between the processing component 1102 and other components. For example, the processing component 1102 may include a multimedia module to facilitate the interaction between the multimedia component 1108 and the processing component 1102.

The memory 1104 is configured to store various types of data to support the operation of the apparatus 1100. Examples of such data include: instructions for any application or method operating on the apparatus 1100, contact data, phone book data, messages, pictures, videos, etc. The memory 1104 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disc.

The power supply component 1106 provides power to the various components of the apparatus 1100. The power supply component 1106 may include a power management system, one or more power sources, and other components associated with generating, managing, and distributing power for the apparatus 1100.

The multimedia component 1108 includes a screen that provides an output interface between the apparatus 1100 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to detect touch, swipe, and gestures performed on the touch panel. The touch sensor may not only detect the boundaries of the touch or swipe action, but also detect the time duration and pressure associated with the touch or swipe action. In some embodiments, the multimedia component 1108 includes a front camera and/or a rear camera. When the apparatus 1100 is in an operating mode, such as a photographing mode or a video capturing mode, the front camera and/or the rear camera may receive external multimedia data. Each of the front camera and rear camera may be a fixed optical lens system or have a focal length and optical zoom capability.

The audio component 1110 is configured to output and/or input audio signals. For example, the audio component 1110 includes a microphone (MIC), and when the apparatus 1100 is in an operation mode, such as a call mode, a recording mode, and a speech recognition mode, the microphone is configured to receive an external audio signal. The received audio signal can be further stored in the memory 1104 or sent via the communication component 1116. In some embodiments, the audio component 1110 also includes a speaker for outputting audio signals.

The I/O interface 1112 provides an interface between the processing component 1102 and peripheral interface modules. The peripheral interface modules may be keyboards, click wheels, buttons, etc. These buttons may include, but are not limited to, a home button, a volume button, a start button, and a lock button.

The sensor component 1114 includes one or more sensors for providing various aspects of status assessment of the apparatus 1100. For example, the sensor component 1114 can detect the on/off state of the apparatus 1100, and the relative positioning of components, e.g., the components being the display and keypad of the apparatus 1100; the sensor component 1114 can also detect the position change of the apparatus 1100 or the position change of a component of the apparatus 1100, the presence or absence of user contact with the apparatus 1100, the orientation or acceleration/deceleration of the apparatus 1100, and the temperature change of the apparatus 1100. The sensor component 1114 can include a proximity sensor configured to detect the presence of a nearby object without any physical contact. The sensor component 1114 can also include an optical sensor, such as a complementary metal oxide semiconductor (CMOS) or charge coupled device (CCD) image sensor, for use in imaging applications. In some embodiments, the sensor component 1114 can also include an acceleration sensor, a gyroscope sensor, a magnetic sensor, a pressure sensor, or a temperature sensor.

The communication component 1116 is configured to facilitate wired or wireless communication between the apparatus 1100 and other devices. The apparatus 1100 can access a radio network based on a communication standard, such as WiFi, 2G, 3G, 4G Long Term Evolution (LTE), 5G New Radio (NR), or a combination thereof. In an exemplary embodiment, the communication component 1116 receives a broadcast signal or broadcast-related information from an external broadcast management system via a broadcast channel. In an exemplary embodiment, the communication component 1116 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology, and other technologies.

In an exemplary embodiment, the apparatus 1100 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above-mentioned cell determination method.

In an exemplary embodiment, a non-transitory computer-readable storage medium including instructions is also provided, such as a memory 1104 including instructions, and the instructions can be executed by the processor 1120 of the apparatus 1100 to complete the above-mentioned cell determination method. For example, the non-transitory computer-readable storage medium can be a ROM, a random access memory (RAM), a compact disc read-only memory (CD-ROM), a magnetic tape, a floppy disk, an optical data storage device, etc.

Those skilled in the art will readily appreciate other implementations of the present invention after considering the specification and practicing the disclosure. The present invention is intended to cover any variations, uses, or adaptations of the present invention that follow the general principles of the present invention and include common knowledge or customary techniques in the art that are not disclosed in the present invention. The description and embodiments are to be considered exemplary only, and the true scope and spirit of the present invention are indicated by the appended claims.

It should be understood that the present invention is not limited to the exact structures that have been described above and shown in the drawings, and that various modifications and changes may be made without departing from the scope thereof. The scope of the present invention is limited only by the appended claims.

It should be noted that, relational terms such as first and second used herein are only used to distinguish one entity or operation from another entity or operation, and do not necessarily require or imply any such actual relationship or order between these entities or operations. The terms "include", "comprises" or any other variants thereof are intended to cover non-exclusive inclusion, so that a process, method, article or device including a series of elements includes not only those elements, but also other elements not explicitly listed, or also includes elements inherent to such process, method, article or device. In the absence of further restrictions, the elements limited by the expression "comprises ...: do not exclude the presence of other identical elements in the process, method, article or device including the elements.

The method and apparatus provided in the embodiments of the present invention are described in detail above. Specific examples are used herein to illustrate the principles and implementation methods of the present invention. The description of the above embodiments is only used to help understand the method of the present invention and its core idea. At the same time, those skilled in the art can made changes to the specific implementation methods and the scope of application according to the idea of the present invention. In summary, the content of this specification should not be understood as a limitation on the present invention.

## Claims

1. A cell determination method, performed by a terminal, comprising:
receiving downlink control information for scheduling multiple cells (MC-DCI);
determining relevant information of the MC-DCI; and
determining, based on an association relationship between the relevant information and at least one cell, that the at least one cell corresponding to the relevant information of the MC-DCI is a cell scheduled by the MC-DCI.

2. The method according to claim 1, wherein the relevant information comprises at least one of:
a radio network temporary identity (RNTI) used for scrambling the MC-DCI; or
a resource for receiving the MC-DCI.

3. The method according to claim 2, wherein the resource comprises at least one of:
a cell;
a bandwidth part (BWP);
a control resource set (CORESET); or
a search space (SS).

4. The method according to any one of claims 1 to 3, further comprising:
determining the association relationship according to a protocol; and/or
determining the association relationship according to indication information sent by a network device.

5. A cell determination method, performed by a terminal, comprising:
receiving downlink control information for scheduling multiple cells (MC-DCI); and
determining a cell scheduled by the MC-DCI according to indication information sent by a network device.

6. The method according to claim 5, wherein the indication information is carried in at least one of:
a media access control control element (MAC CE); or
a radio resource control (RRC) message.

7. The method according to claim 6, further comprising:
in a case that the MAC CE carrying the indication information is not correctly received, determining that at least one preset cell is the cell scheduled by the MC-DCI, or determining that a cell of a cell combination with a preset sequence number among a preset cell combination list is the cell scheduled by the MC-DCI.

8. The method according to claim 7, further comprising:
determining the at least one preset cell and/or the preset cell combination list according to a protocol; and/or
determining the at least one preset cell and/or the preset cell combination list according to an indication from the network device.

9. A downlink control information sending method, performed by a network device, comprising:
determining a cell scheduled by downlink control information for scheduling multiple cells (MC-DCI);
setting relevant information of the MC-DCI according to an association relationship between the relevant information and at least one cell and the cell scheduled by the MC-DCI; and
sending the MC-DCI to a terminal.

10. The method according to claim 9, wherein the relevant information comprises at least one of:
a radio network temporary identity (RNTI) used for scrambling the MC-DCI; or
a resource for receiving the MC-DCI.

11. The method according to claim 10, wherein the resource comprises at least one of:
a cell;
a bandwidth part (BWP);
a control resource set (CORESET); or
a search space (SS).

12. The method according to any one of claims 9 to 11, further comprising:
determining the association relationship according to a protocol; and/or
sending indication information to the terminal, wherein the indication information is used for indicating the association relationship.

13. A downlink control information sending method, performed by a network device, comprising:
sending indication information to a terminal, wherein the indication information is used for indicating a cell scheduled by downlink control information for scheduling multiple cells (MC-DCI) that is sent to the terminal; and
sending the MC-DCI to the terminal.

14. The method according to claim 13, wherein the indication information is carried in at least one of:
a media access control control element (MAC CE); or
a radio resource control (RRC) message.

15. The method according to claim 13, further comprising:
indicating at least one preset cell and/or a preset cell combination list to the terminal, wherein, in a case that an MAC CE carrying the indication information is not correctly received, the terminal determines that the at least one preset cell is the cell scheduled by the MC-DCI, or determines that a cell of a cell combination with a preset sequence number among the preset cell combination list is the cell scheduled by the MC-DCI.

16. A cell determination apparatus, comprising:
a receiving module, configured to receive downlink control information for scheduling multiple cells (MC-DCI); and
a processing module, configured to determine relevant information of the MC-DCI, and determine, according to an association relationship between the relevant information and at least one cell, that the at least one cell corresponding to the relevant information of the MC-DCI is a cell scheduled by the MC-DCI.

17. A cell determination apparatus, comprising:
a receiving module, configured to receive downlink control information for scheduling multiple cells (MC-DCI); and
a processing module, configured to determine a cell scheduled by the MC-DCI according to indication information sent by a network device.

18. A downlink control information sending apparatus, comprising:
a processing module, configured to determine a cell scheduled by downlink control information for scheduling multiple cells (MC-DCI), and set relevant information of the MC-DCI according to an association relationship between the relevant information and at least one cell and the cell scheduled by the MC-DCI; and
a sending module, configured to send the MC-DCI to a terminal.

19. A downlink control information sending apparatus, comprising:
a sending module, configured to send indication information to a terminal, wherein the indication information is used for indicating a cell scheduled by downlink control information for scheduling multiple cell (MC-DCI) that is sent to the terminal; and send the MC-DCI to the terminal.

20. A communication apparatus, comprising:
a processor and a memory storing a computer program;
wherein the computer program, when being executed by the processor, causes the cell determination method according to any one of claims 1 to 8 to be implemented.

21. A communication apparatus, comprising:
a processor and a memory storing a computer program;
wherein the computer program, when being executed by the processor, causes the downlink control information sending method according to any one of claims 9 to 15 to be implemented.

22. A computer-readable storage medium storing a computer program, wherein the computer program, when being executed by a processor, causes the steps of the cell determination method according to any one of claims 1 to 8 to be implemented.

23. A computer-readable storage medium storing a computer program, wherein the computer program, when being executed by a processor, causes the steps of the downlink control information sending method according to any one of claims 9 to 15 to be implemented.
